# EUROPÄISCHE PATENTSCHRIFT

(11) **EP 2 788 445 B1**
(45) Veröffentlichungstag und Bekanntmachung des Hinweises auf die Patenterteilung: **14.10.2015**
(21) Anmeldenummer: 12783240.0
(22) Anmeldetag: 09.11.2012
(51) Int. Cl.: C09J 133/00

(54) **REAKTIVE 2K-SCHMELZKLEBSTOFFZUSAMMENSETZUNG**
REACTIVE TWO-COMPONENT HOTMELT ADHESIVE COMPOSITION
COMPOSITION DE COLLE FUSIBLE RÉACTIVE À DEUX COMPOSANTS

(30) Priorität: 06.12.2011 DE 102011087834
(43) Veröffentlichungstag der Anmeldung: 15.10.2014
(73) Patentinhaber: Henkel AG&Co. KGAA, 40589 Düsseldorf (DE)
(72) Erfinder: BUTTERBACH, Rüdiger, 45219 Essen (DE); KOPANNIA, Siegfried, 47809 Krefeld (DE); SCHUBERT, Carsten, 40229 Düsseldorf (DE); SIEPENKOTHEN, Judith, 40885 Ratingen (DE)
(86) Internationale Anmeldenummer: PCT/EP2012/072314
(87) Internationale Veröffentlichungsnummer: WO 2013/083355

(56) Entgegenhaltungen:
- WO-A2-2006/084537
- DE-A1-102008 019 439
- DE-A1-102009 028 180

## Beschreibung

Die Erfindung betrifft eine Schmelzklebstoffzusammensetzung, die zwei unterschiedliche Polymere enthalten, die miteinander reaktive Gruppen aufweisen, und diese Polymere beim Aufschmelzen sich mischen und miteinander reagieren. Weiterhin wird ein Verfahren beschrieben, wobei ein in der Wärme schrumpfbares Substrat mit einem Gegenstand in der Wärme verklebt wird.

Verfahren zum Verkleben und Abdichten von verschiedenen Substraten sind allgemein bekannt. Dabei werden solche Verfahren beispielsweise auch eingesetzt, um Rohrdurchführungen, Kabeldurchführungen oder Kabelanschlüsse miteinander zu verbinden und gegen äußere Einflüsse abzudichten. Es können nicht vernetzende oder vernetzende Polymersysteme eingesetzt werden, diese werden üblicherweise in der Wärme eingebracht, so dass mögliche Hohlräume ausgefüllt werden können.

WO 2000/137119 beschreibt ein Verklebungssystem, bei dem auf der inneren Seite eines Substrates ein thermisch leitfähiger Klebstoff aufgebracht wird, dieses mit einer äußeren Hülle als zweites Substrat in Kontakt gebracht wird, und dann die äußere Hülle durch Wärmeeinwirkung aufgeschrumpft wird. Dabei werden als Klebstoffe thermisch leitfähige Klebstoffe beschrieben, wobei die Leitfähigkeit durch Zusatz von Kohlenstoff, Metall, Metalloxiden und ähnlichen Pulvern hergestellt wird.

Die US 5470622 beschreibt eine Methode zum Verbinden von Gegenständen, wobei ein reaktiver Klebstoff auf ein Substrat aufgetragen wird, ein äußeres Substrat hergestellt aus einem hitzeverformbaren Material damit verbunden wird und durch Erwärmen das äußere Substrat auf den inneren Gegenstand aufgeschrumpft wird. Als Klebstoff werden dabei amorphe thermoplastische Bindemittel beschrieben, beispielsweise Polystyrol, Polyamide, Polyurethane, Polycarbonate und Polyacrylate.

Die WO 2009/037433 beschreibt einen schlauchförmigen, hitzeschrumpfbaren Gegenstand, der um einen inneren Draht als Füllmaterial aufgebracht werden kann. Dabei enthält dieses auf der inneren Seite einen in der Wärme fließfähige Schicht, die beispielsweise aus EVA-Copolymeren bestehen kann. Weitere Ausführungen zu der Zusammensetzung des Klebstoffes werden nicht gemacht.

Als Kleb- und Dichtstoffe sind beispielsweise reaktive 1-Komponenten Materialien bekannt, die beispielsweise mit Feuchtigkeit vernetzen können. Es ist ebenso bekannt, dass 2-Komponenten Materialien eingesetzt werden, die nach dem Mischen und Einbringen auf die Klebestelle nach einer kurzen Zeit vernetzen. 1-K Materialien, die mit Feuchtigkeit reaktive Gruppen aufweisen, können in wasserfreiem Zustand gelagert werden. Es erfordert also eine entsprechende aufwendige Verpackung und Applikation dieser Materialien. Werden 2-Komponenten Materialien eingesetzt, müssen diese vor dem Verkleben gemischt werden. Um eine geplante Festigkeit zu erreichen, ist sicherzustellen, dass ein vorgegebenes Mischungsverhältnis eingehalten wird. Das kann durch apparativen Aufwand gelöst werden, solche Mischapparaturen sind aber teuer. Ein weiterer Nachteil besteht darin, dass diese Materialien häufig bei Raumtemperatur noch flüssig sind. Eine Vernetzung zu einem festen Klebstoffmaterial erfordert eine Reaktionszeit. Während dieser Zeit können die zu verklebenden Substrate noch gegeneinander bewegt werden, damit ist eine Weiterverarbeitung noch nicht möglich.

Werden nicht vernetzende Polymere eingesetzt, zum Beispiel Heißschmelzklebstoffe, erfordern diese im Allgemeinen keine speziellen Lagerbedingungen. Es ist aber festzustellen, dass unter Umständen unter den Bedingungen der Anwendung, diese Materialien bei Erwärmung auch wieder weich werden. Damit verlieren sie zumindest teilweise ihre mechanischen Klebstoffeigenschaften, die Stabilität und die Eigenschaften der endgültigen Verklebung sind also auf Dauer nicht sichergestellt.

Aufgabe der vorliegenden Erfindung ist es deswegen eine Kleb- und Dichtstoffzusammensetzung bereitzustellen, die in Granulatform gelagert werden kann. Dabei sollen reaktive Gruppen enthalten sein, die unter Anwendung von Wärme reagieren können. Die entsprechenden granulierten Zusammensetzungen sollen unter üblichen Lagerbedingungen stabil sein und nicht reagieren. Zu ihrer Anwendung sollen die Materialien aufgeschmolzen werden und an die zu verklebenden Substratteile aufgebracht werden. Der Kleb- und Dichtstoff auf den vorbeschichteten Substrate kann durch weiteres Erhöhen der Temperatur vernetzt werden. Damit ist es möglich, die Arbeitsschritte Herstellen der Klebund Dichtstoffzusammensetzungen, Beschichten von Gegenständen mit einer vernetzbaren Zusammensetzung und nachfolgendes Verkleben und Vernetzen des Klebstoffes arbeitstechnisch zu trennen. Dadurch wird ein entsprechendes Verklebungsverfahren in der industriellen Anwendung vereinfacht.

Die Aufgabe wird gelöst durch einen reaktiven Schmelzklebstoff umfassend zwei getrennt vorliegende Komponenten A und B, die jeweils mindestens ein Polymer A oder B mit unterschiedlichen funktionellen Gruppen enthalten, wobei diese Gruppen unter Temperatureinwirkung miteinander reagieren können, und die miteinander reaktiven funktionellen Gruppen ausgewählt werden aus COOH, OH, NH, Epoxy, Anhydrid, in mindestens einer der Komponenten weitere nicht reaktive Polymere und/oder Additive enthalten sind, wobei die Komponenten in räumlich getrennten Bereichen vorliegen, dadurch gekennzeichnet, dass der Schmelzklebstoff eine erste Temperatur im Bereich zwischen 80 bis 150 °C aufweist, bei der die Komponenten schmelzen und miteinander mischbar sind, ohne dass die funktionellen Gruppen miteinander reagieren, der Klebstoff in einem zweiten Temperaturbereich zwischen 130 bis 190 °C schmilzt und chemisch vernetzt, wobei die zweite Temperatur oberhalb der ersten Temperatur liegt.

Die Erfindung betrifft weiterhin einen Gegenstand, der mit einem erfindungsgemäßen Klebstoff in nicht vernetztem Zustand beschichtet ist. Die Erfindung betrifft weiter ein Verfahren zum Verkleben von zwei Substraten, wobei ein erfindungsgemäßer reaktiver Klebstoff unter Aufschmelzen gemischt wird, diese Klebstoffschmelze auf ein erstes Substrat aufgebracht wird, und gegebenenfalls nach Abkühlen mit einem zweiten Substrat verklebt wird, wobei beide Substrate und der Klebstoff auf eine zweite Temperatur oberhalb der Schmelztemperatur erwärmt wird.

Erfindungsgemäß muss der Schmelzklebstoff zwei unterschiedliche Polymere enthalten. Unterschiedliche Polymere im Sinne dieser Erfindung bedeutet, dass entweder zwei Polymere mit unterschiedlichem Rückgrat ausgewählt werden oder es werden Polymere gleicher chemischer Zusammensetzungen ausgewählt, die aber unterschiedliche funktionelle Gruppen tragen. Dabei können sich die Polymere zusätzlich auch in ihrem Molekulargewicht unterscheiden.

Als Polymere A oder B, die mit reaktiven Gruppen ausgestattet sind, sind solche Polymere geeignet, die bei 25°C fest sind. Sie können ausgewählt werden aus Polyestern, Polyamiden, Polypropylenen, Acrylatcopolymeren, beispielsweise Ethylen(meth)acrylatcopolymeren oder (Meth)acrylatpolymeren. Dabei können Basispolymere ausgewählt werden, die dann mit geeigneten funktionellen Gruppen modifiziert werden oder solche Gruppen bereits enthalten.

Eine Gruppe geeigneter Basispolymere sind Poly(meth)acrylate. Solche Polyacrylate sind beispielsweise erhältlich durch Polymerisation oder Copolymerisation von ethylenisch ungesättigten Carbonsäureestern. Die Schreibweise (Meth)acrylat bedeutet hier sowohl Methacrylat als auch Acrylat sowie Mischungen aus beiden. Geeignete Monomere sind ausgewählt aus der Gruppe der (Meth)acrylate wie beispielsweise Alkyl(meth)acrylate von gradkettigen, verzweigten oder cycloaliphatischen Alkoholen mit 1 bis 40 C-Atomen, beispielsweise Methyacrylat, Ethylacrylat, Butylacrylat; Aryl(meth)acrylate wie zum Beispiel Benzyl(meth)acrylat oder Phenyl(meth)acrylat; Mono(meth)acrylate von Ethern oder Polyoxyalkylenglycolen. Es können auch funktionalisierte (Meth)acrylatmonomere einpolymerisiert werden, beispielsweise Hydroxyalkyl(meth)acrylate von gradkettigen, verzweigten oder cycloaliphatischen Diolen mit 2-36 C-Atomen oder Epoxy(meth)acrylate.

Neben den beschriebenen (Meth)acrylaten können die zu polymerisierenden Zusammensetzungen auch weitere ungesättigte Monomere aufweisen, die copolymerisierbar sind. Hierzu gehören unter anderem 1-Alkene, verzweigte Alkene, Acrylnitril, Vinylester wie z.B. Vinylacetat, Styrol, substituierte Styrole, heterocyclische Verbindungen wie 2-Vinylfuran, Maleinsäurederivate, Diene sowie aminofunktionalisierten und/oder mercaptofunktionalisierten Verbindungen. Solche Polymere sind in vielen Zusammensetzungen und Molekulargewichten erhältlich.

Es sind auch Copolymere wie Ethylen-Alkylacrylat-Copolymere, Ethylen-Alkylmethacrylat-Copolymere, Ethylen-Acrylsaeure-Copolymere, sowie Terpolymere mit Ethylen(Meth) Acrylat geeignet. Insbesondere sind solche Copolymere mit einem (Meth)Acrylatgehalt von 2 bis 45 Gew-% geeignet.

Erfindungsgemäß können auch Polyamide als Basispolymer eingesetzt werden. Insbesondere sind solche Polyamide geeignet, die als eine Aufbaukomponenten Dimerfettsäuren und ihre Derivate enthalten. Zusätzlich können auch andere C4-C18-Dicarbonsäure enthalten sein. Die Diamin-Komponente geeigneter Polyamide besteht im Wesentlichen aus einem oder mehreren aliphatischen Diaminen, vorzugsweise mit einer geraden Anzahl an Kohlenstoffatomen, wobei die Aminogruppen an den Enden der Kohlenstoffketten sind. Die aliphatischen Diamine können 2 bis zu 20 Kohlenstoffatome enthalten, wobei die aliphatische Kette linear oder leicht verzweigt sein kann. Die Amino-Komponente kann weiterhin cyclische Diamine oder heterocyclische Diamine enthalten. Zusätzlich können auch noch Polyoxyalkylendiamine mit verwendet werden. Solche Polyamide sind handelsüblich

Weiterhin sind auch Polyolefincopolymere geeignet, wie beispielsweise Ethylen/Propylen-Copolymere, Butylen/Propylen-Copolymere oder Ethylen/Butylen/Propylen-Terpolymere.

Ebenfalls als Basispolymere sind Polyester geeignet. So können beispielsweise Polyesterpolyole verwendet werden, die durch Umsetzung von niedermolekularen Alkoholen, wie beispielsweise Ethylenglykol, Diethylenglykol, Neopentylglykol, Glycerin oder Trimethylolpropan; oder Polyoxyalkylenglycole mit Polycarbonsäuren erhalten werden. Es kann sich um Dicarbonsäuren und/oder Tricarbonsäuren oder deren Derivate handeln. Geeignete Dicarbonsäuren sind beispielsweise Adipinsäure oder Bernsteinsäure, ungesättigte Dicarbonsäuren wie Maleinsäure oder Fumarsäure, sowie aromatische Dicarbonsäuren. Die genannten Säuren können einzeln oder als Gemische aus zwei oder mehr davon eingesetzt werden.

Die erfindungsgemäß geeigneten Polymere sind bei Raumtemperatur (25° C) fest. Insbesondere weisen sie einen Erweichungspunkt über 75°C auf (gemessen nach DIN 53011), dabei soll die Obergrenze vorzugsweise unter 200 °C liegen.

Die erfindungsgemäß geeigneten Polymere A und B müssen funktionelle Gruppen aufweisen. Diese funktionellen Gruppen sollen einzeln stabil sein, als Mischung der Polymere A und B sollen sie jedoch unter Einwirkung von Wärme vernetzen können. Beispiele für solche funktionellen Gruppen sind Anhydridgruppen, Epoxidgruppen, Carbonsäuregruppen, primäre und / oder sekundäre Aminogruppen, OH-Gruppen. Die funktionellen Gruppen der Polymere A oder B werden so ausgewählt, dass sie zusammen miteinander reagieren können, beispielsweise Anhydridgruppen mit Epoxidgruppen, Anhydridgruppen mit OH-Gruppen oder Aminogruppen, Epoxidgruppen mit Aminogruppen, Carbonsäuregruppen mit Epoxidgruppen oder Aminogruppen. Es können auch zwei verschiedene funktionelle Gruppen an einem Polymer oder in einer Komponente vorliegen, soweit sichergestellt ist, dass diese nicht miteinander reagieren, beispielsweise OH-Gruppen und Aminogruppen oder Carbonsäuregruppen und Anhydridgruppen.

Die Anzahl der funktionellen Gruppen pro Polymerkette wird so gewählt, dass eine Vernetzung sichergestellt wird, beispielsweise sollen im Durchschnitt mehr als 1,5 bevorzugt mindestens zwei funktionelle Gruppen pro Molekül enthalten sein. Wird eine höhere Anzahl von funktionellen Gruppen gewählt, steigt der Vernetzungsgrad des Klebstoffes. Wird eine niedrigere Anzahl gewählt sinkt die Vernetzungsdichte und der Klebstoff bleibt elastischer oder wird nur gelartig vernetzt.

Die funktionellen Gruppen können auf unterschiedlicher Art und Weise in das Polymer einreagiert werden. Beispielsweise ist es möglich bei der Herstellung der Polymere Monomere einzusetzen, die zu der polymerisierbaren Gruppe eine weitere funktionelle Gruppe aufweisen, beispielsweise eine OH-Gruppe, die nicht am Aufbau des Polymerrückgrats teilnimmt. Eine andere Möglichkeit besteht darin, Polymere nachträglich zu funktionalisieren. Beispielsweise können Polyolefine nachträglich durch Oxidation oder durch reaktive Modifikation mit Monomeren, die polare Gruppen enthalten, mit funktionellen Gruppen versehen werden. Eine weitere Möglichkeit besteht darin, durch polymeranaloge Reaktionen in Polymere funktionelle Gruppen einzuführen. Beispielsweise können Isocyanatgruppen durch niedermolekulare Verbindungen modifiziert werden, die eine mit NCO-Gruppen reaktive Gruppe aufweisen sowie eine andere der oben erwähnten funktionellen Gruppen. Eine andere Möglichkeit besteht darin, beispielsweise anhydridgruppen-haltige Polymere durch Umsetzen mit niedermolekularen Verbindungen, die eine nucleophile Gruppe aufweisen und eine weitere funktionelle Gruppe, zu funktionalisieren.

Solche Reaktionen zur Herstellung der funktionalisierten Polymere A und B sind dem Fachmann bekannt. Solche Polymere sind auch kommerziell erhältlich. Diese Polymere sind einzeln lagerstabil.

Die erfindungsgemäß geeigneten, funktionalisierten Polymere müssen bei Raumtemperatur fest sein. Sie weisen üblicherweise ein Molekulargewicht von 500 bis 200000 g/mol auf (zahlenmittleres Molekulargewicht, MN, wie über GPC bestimmbar). Dabei soll der Erweichungspunkt dieser Polymere über 75°C liegen. Weiterhin liegt er unter 150 °C insbesondere unter 130°C. Der Erweichungspunkt kann durch das Molekulargewicht der Polymere oder durch die Zusammensetzung der Monomere beeinflusst werden. Die Polymere A oder B sollen im geschmolzenen Zustand einen Meltindex von 2 bis 2500 g/ 10 min (190 °C, 2,16 kg, ISO 1133) oder eine Viskosität bei 80 bis 150 °C von 5000 mPas bis 2000000 mPas aufweisen (Brookfield Viskosimeter, ASTM D 3236).

Die funktionellen Gruppen der Polymere A und B werden so ausgewählt, dass sie eine Reaktionstemperatur zur Vernetzungsreaktion von 130 bis 190 °C aufweisen, insbesondere von 140°C bis 170°C. Dabei ist es wesentlich, dass die Reaktionstemperatur oberhalb der Schmelztemperatur liegt, beispielsweise mehr als 30 °C oberhalb der Schmelztemperatur aus dem ersten Bereich. Unter Reaktionstemperatur soll verstanden werden, dass bei einer Zeit von bis zu 20 min. die funktionellen Gruppen reagieren und der Klebstoff ein Gel oder ein Netzwerk bildet. Die Reaktion ist bestimmbar durch einen Viskositätsanstieg um mindestens Faktor 2. Bei der Schmelztemperatur soll der Klebstoff im Wesentlichen nicht vernetzen, es kann sich aber die Viskosität der Schmelze leicht erhöhen.

Der erfindungsgemäße Schmelzklebstoff zeichnet sich gemäß einer bevorzugten Ausführungsform dadurch aus, dass die Komponente A Polymer A und die Komponente B Polymer B enthält, wobei die Polymere A und B insbesondere unterschiedlich sind.

Als weitere Bestandteile sind in dem erfindungsgemäßen Schmelzklebstoff Zusatzstoffe, wie Additive und/oder nicht reaktive Polymere enthalten. Diese Zusatzstoffe können in einer der beiden Komponenten A oder B oder in beiden enthalten sein. Beispiele für geeignete inerte Polymere sind solche ohne reaktive Gruppen, wie EVA oder Polyolefine; auch nicht reaktive Harze sind geeignet; es können auch Stabilisatoren, Antioxidantien, Katalysatoren, Pigmente, Füllstoffe, Haftvermittler, Weichmacher oder Wachse enthalten sein. Die Menge aller Zusatzstoffe soll bis zu 80 Gew. % bezogen auf den Klebstoff betragen, insbesondere bis zu 70 Gew-% (bezogen auf den Schmelzklebstoff).

Bevorzugt ist es zweckmäßig, wenn die erfindungsgemäßen Klebstoffe 10 bis 79 Gew. % inerte Polymer und/oder Harze enthalten. Insbesondere geeignet sind dabei Ethylen-Vinylacetat-Copolymere (EVA), die keine reaktiven funktionellen Gruppen aufweisen. Solche Copolymere sind dem Fachmann bekannt. Es handelt sich dabei um Polymere mit einem Vinylacetatgehalt von 10 bis 40 mol-% bezogen auf die Summe der Monomeren. Gegebenenfalls können noch weitere Comonomere enthalten sein. Diese Polymere enthalten keine mit den oben genannten reaktiven funktionellen Gruppen reaktiven Gruppen. Sie sind mit den funktionalisierten Polymeren gut mischbar.

Eine weitere Gruppe von geeigneten inerten Polymeren sind Copolymere aus 1-Alkylenen und Acrylatmonomeren geeignet. Die sollen dann ebenfalls keine vernetzbaren funktionellen Gruppen aufweisen. Sie sind üblicherweise mit den Polymeren A und B gut verträglich. Die Polymere sollen eine niedrige Viskosität aufweisen. Insbesondere sind Ethylen/Methacrylatcopolymere geeignet.

Insbesondere geeignet sind Polymere, die eine Viskosität beispielsweise von 5000 bis 2000000 mPas bei 160°C aufweisen, bevorzugt unter 200000 mPas. Niedrige Viskositäten sind bevorzugt, um eine Mischbarkeit der Komponenten zu verbessern. Solche Polymere sind kommerziell erhältlich. Besonders bevorzugt sind EVA-Polymere.

Als Harze sind die bekannten, bei Raumtemperatur festen Harze geeignet. Diese sind dem Fachmann bekannt. Es sind dieses beispielsweise aromatische, aliphatische oder cycloaliphatische Kohlenwasserstoff-Harze, sowie modifizierte oder hydrierte Versionen davon. Weitere geeignete Harze sind Abietinsäurederivate, modifizierte Naturharze, wie Balsamharz, Tallharz oder Wurzelharz; Alkylester von Kolophonium; Terpen-Harze, wie Styrol-Terpene, α-Methyl-Styrol-Terpene sowie hydrierte Derivate davon; Acrylsäure-Copolymerisate, vorzugsweise Styrol-Acrylsäure-Copolymere. Die Menge der inerten Polymere oder Harze kann 0 bis 80 % betragen, insbesondere 10 bis 70 Gew.-%, ganz besonders bevorzugt 20 bis 70 Gew.-%.

Weichmacher werden vorzugsweise zum Einstellen der Viskosität oder der Flexibilität verwendet und sind im allgemeinen in einer Konzentration von 0 - 20 Gew.%, vorzugsweise von 0 bis 15 Gew.% enthalten. Geeignete Weichmacher sind beispielsweise Weißöle, Mineralöle, Polypropylen-, Polybuten-, Polyisopren-Oligomere, Benzoatester, Phthalate, Kohlenwasserstofföle, Polypropylenglykol und Polybutylenglykol. Diese müssen mit den Polymeren A und B verträglich sein.

Gegebenenfalls können dem Klebstoff Wachse in Mengen von 0 bis 5 Gew.-% zugegeben werden. Die Menge ist dabei vorzugsweise so bemessen, dass einerseits die Viskosität auf den gewünschten Bereich abgesenkt wird, andererseits aber die Adhäsion nicht negativ beeinflusst wird. Das Wachs kann natürlichen oder synthetischen Ursprungs sein. Als natürliche Wachse können pflanzliche Wachse, tierische Wachse, Mineralwachse oder petrochemische Wachse eingesetzt werden.

Darüber hinaus können dem erfindungsgemäßen Schmelzklebstoff übliche Stabilisatoren oder Katalysatoren zugesetzt. Stabilisatoren haben die Aufgabe, den Klebstoff während der Verarbeitung vor Zersetzung zu schützen. Hier sind insbesondere die Antioxidantien zu nennen. Katalysatoren können entsprechend den reaktiven Gruppen ausgewählt werden. Diese beschleunigen die Vernetzungsreaktion. Es werden üblicherweise Mengen bis zu 3 Gew.-% dem Schmelzklebstoff beigefügt.

Ein weiteres Additiv sind Pigmente oder Füllstoffe. Die sollen fein verteilt vorliegen und können in Mengen bis zu 30 Gew.-% eingesetzt werden. Es könne die üblichen Pigmente oder Füllstoffe, wie Metalloxide, Ruß, Kreide, Aluminiumsilikate und ähnliche Pulver eingesetzt werden.

Je nach Ausführungsform können die Zusatzstoffe einzeln oder mehrere in einer oder in beiden Komponenten vorliegen. Dabei ist es bekannt, diese Zusatzstoffe entweder in einem Extruder zu mischen oder es werden die Bestandteile in einem Rührkessel geschmolzen und durch Homogenisieren mit einem Mixaggregat vermischt.

Eine bevorzugte Ausführungsform des vollständigen Schmelzklebstoffs enthält 10 bis 70 % Polymer A, 10 bis 70 % Polymer B, 10 bis 70 % inerte Polymere und/oder Harz, 0 bis 30 % Additive, insbesondere Pigment/Füllstoffe und Stabilisatoren. Dabei soll die Summe 100% ergeben. Dabei ist Polymer A vorzugsweise in der Komponente A enthalten und Polymer B vorzugsweise in der Komponente B.

Es entspricht einer bevorzugten Ausführungsform der Erfindung, wenn der Schmelzklebstoff nach Erwärmen auf die erste Temperatur und Mischen als homogene Schicht auf einem Kunststoffsubstrat vorliegt.

Erfindungsgemäß ist es notwendig, dass die Komponenten A und B voneinander räumlich getrennt vorliegen. Das kann beispielsweise erreicht werden, dass die Polymere getrennt hergestellt und mit den Zusatzstoffen gemischt werden. In einer Ausführungsform werden die Komponenten danach vermahlen oder granuliert. Dabei soll die Teilchengröße im Allgemeinen kleiner 10 mm vorliegen, beispielsweise kleiner 5 mm, insbesondere größer 50 µm bevorzugt größer 200 µm. Nach dem Vermahlen oder Granulieren können die beiden Komponenten als Feststoff gemischt werden. Die Auswahl der Teilchengröße soll so erfolgen, dass bei Lagerung und Transport eine Entmischung möglichst vermieden wird. Das kann gegebenenfalls unterstützt werden, wobei solche Pulver oder Granulate durch kurzzeitiges Erwärmen an der Oberfläche teilweise aneinander gesintert werden. So werden lagerstabile granulierte Klebstoffmischungen erhalten.

Eine andere Ausführungsform der Erfindung stellt beispielsweise durch Co-extrusion einen Strang eines erfindungsgemäßen Klebstoffes bereit, der innen eine Komponente A aufweist, auf der äußeren Seite die andere Komponente B . Durch Kühlung unmittelbar nach der Coextrusion vermischen sich die unterschiedlichen Zusammensetzungen nicht und können nach einer Zerkleinerung als Granulat erhalten werden, das beide Komponenten miteinander verbunden aufweist. Das Mischungsverhältnis der Komponenten A und B kann dabei über die Schichtstärke der jeweiligen Polymere direkt bei der Coextrusion eingestellt werden.

Es können auch zwei parallele Stränge der Komponenten A und B aneinanderklebend extrudiert werden, die dann granuliert werden können.

Die Mischungen des reaktiven Schmelzklebstoffes sind lagerfähig, soweit sie unterhalb des Erweichungstemperaturbereichs gelagert werden.

Wie oben bereits beschrieben, sind die erfindungsgemäßen Schmelzklebstoffe lagerfähig. Sie können als Pulver oder Granulat zu dem Anwender transportiert werden. Zur Durchführung eines erfindungsgemäßen Verfahrens werden die Granulate aufgeschmolzen bei einer Temperatur, die unterhalb der Reaktionstemperatur der funktionellen Gruppen liegt. Die Schmelztemperatur beträgt im Allgemeinen zwischen 80 bis 150 °C. Das Schmelzen kann in bekannten Vorrichtungen geschehen, es kann Batch-weise durchgeführt werden, insbesondere ist jedoch ein kontinuierliches Verfahren geeignet. Dazu können die Polymere beispielsweise in einem Extruder aufgeschmolzen und gemischt werden. Es ist zweckmäßig, wenn die notwendige Verweilzeit bei erhöhten Temperaturen möglichst kurz gehalten wird, es soll aber eine Vermischung der Polymere sichergestellt sein. Dadurch können Beeinträchtigungen der Polymere vermieden werden.

Die Polymere A und B und die Additive werden vorzugsweise so ausgewählt, dass der Klebstoff im Bereich von 80 bis 150 °C eine Viskosität von 10000 bis 500000 mPas (gemessen nach ASTM D 3236) aufweist, insbesondere unter 200000 mPas. Die Schmelztemperatur zur Mischung wird vorzugsweise so eingestellt, dass sie unterhalb der Reaktionstemperatur der funktionellen Polymere liegt.

Bei einem erfindungsgemäßen Verfahren wird der Klebstoff vorzugsweise als Granulat in kleinen Portionen aufgeschmolzen und danach appliziert. Nach dem homogenen Mischen des Schmelzklebstoffes wird dieser unmittelbar auf das Substrat aufgetragen. Dabei kann auf dem Substrat eine Schicht erzeugt werden, die eine Dicke von 5 µm bis 1000 µm aufweist, insbesondere von 10 bis 200 µm. Danach kann die Klebstoffschicht abkühlen und das beschichtete Substrat ist bei Raumtemperatur lagerfähig. Die so beschichteten Zwischenprodukte können danach zum Verkleben mit anderen Substraten eingesetzt werden.

Eine andere Ausführungsform setzt den Klebstoff nicht als Beschichtung eines ebenen Substrates ein, beispielsweise einer Folie, sondern beschichtet die Innenseite eines schlauchförmigen Substrates. Das kann auch kontinuierlich durchgeführt werden, wobei der Schlauch dann in geeignete Stücke konfektioniert wird. Diese beschichteten Zwischenprodukte sind ebenfalls lagerfähig. Dieses Produkt kann dann in einem weiteren Arbeitsschritt als Hülle um eine Gegenstand, beispielsweise eine Steckverbindung, eingesetzt werden.

In einer weiteren Ausführungsform ist es jedoch auch möglich, dass die Mischung des Schmelzklebstoffes als Verguss- oder Spritzguss- Komponente zum Verkleben und Abdichten von anderen Substraten dient. Dabei wird ein innen liegendes Substrat, beispielsweise ein metallischer oder keramischer Gegenstand, mit einer äußeren Kunststoffhülle umhüllt. In den Hohlraum zwischen Hülle und Substrat kann ein erfindungsgemäßer Klebstoff unter Druck eingespritzt werden.

Als weiteren Verfahrensschritt zum endgültigen Vernetzen des erfindungsgemäßen Schmelzklebstoffes wird dieser erwärmt. Die Erwärmung soll auf eine Temperatur durchgeführt werden, die oberhalb von der Reaktionstemperatur der funktionellen Gruppen liegt. Diese beträgt zwischen 130 bis 190 °C, insbesondere über 140°C. Bei dieser Temperatur vernetzt der Klebstoff und es entsteht eine vernetzte oder gelartige, gut haftende Masse.

Das Erwärmen kann durch bekannte Verfahren durchgeführt werden. Beispiele dafür sind IR, NIR, heiße Luft, Beflammen oder Heizplatten. Dabei kann die Substratseite erwärmt werden, soweit sie dabei nicht geschädigt wird. Eine besondere bevorzugte Ausführungsform verwendet IR oder NIR Strahlen. In diesem Falle ist es zweckmäßig, wenn das Substrat, auf das der erfindungsgemäße Klebstoff aufgebracht wurde, durchsichtig ist. In einer anderen Ausführungsform wird ein pigmentierter Klebstoff eingesetzt, der das Erwärmen erleichtert.

In einer ganz besonders bevorzugten Ausführungsform ist das Substrat, das als Trägermaterial für den Schmelzklebstoff benutzt wird, ein schrumpfbares Material. Diese wird so gewählt, dass die Schrumpfungstemperatur oberhalb der Schmelztemperatur liegt. Durch die eingebrachte Wärme im Vernetzungsschritt schmilzt der Schmelzklebstoff auf, gleichzeitig schrumpft die Substrathülle. Durch den Schrumpfungsprozess wird der aufgeschmolzene Schmelzklebstoff in gegebenenfalls noch vorhandene Hohlräume des zu umhüllenden Substrates gedrückt. Durch diese Arbeitsweise kann eine gute Abdichtung ohne Hohlräume von Verbindungen sichergestellt werden.

Als Substrat können die üblichen Substrate eingesetzt werden, die bei den Anwendungstemperaturen stabil sind. Es kann sich um Kunststoff, Metall, Keramik, Holzwerkstoffe oder andere Materialien handeln. Eine bevorzugte Ausführungsform setzt als Substrat zum Auftragen der Klebstoffschicht flexible Kunststoffsubstrate ein. Insbesondere ist der erfindungsgemäße vernetzbare Schmelzklebstoff zur Verklebung und Abdichtung von schlauchförmigen Kunststoffsubstraten mit Steckverbindungen geeignet.

Durch den erfindungsgemäßen Schmelzklebstoff wird ein reaktiver Klebstoff in einer Reaktionsmischung bereitgestellt. Durch die räumliche Trennung der Komponenten weist dieser eine gute Lagerstabilität auf. Der Klebstoff kann dabei als Vorbeschichtung in Zwischenprodukten eingesetzt werden. Nach der endgültigen Vernetzung wird eine elastische und gute Verklebung und Abdichtung der Substrate erhalten.

### Beispiele:

| | **Bestandteil** | **Charakterisierung** |
|---|---|---|
| I | hydriertes cycloaliphatisches KW Harz | Viskosität (160 °C) = 160 mPa s |
| | | Erweichungspunkt = 85 °C |
| | | Säurezahl = 0 mg KOH /g |
| | | |
| II | Ethylen-Butylacrylat-Copolymer | MI = 305 g/10 min |
| | | 36 Gew. % Butylacylat |
| | | Säurezahl = 0 mq KOH /g |
| | | |
| III | Ethylen-Vinylacetat-Copolymer | MI = 530 g/10 min |
| | | 19 Gew. % Vinylacetat |
| | | Säurezahl = 0 mg KOH /g |
| | | |
| IV | Ethylen-Acrylsäureester-Maleinsäureanhydrid-Terpolymer | MI = 200 g/10 min |
| | | 7 Gew. % Acrylsäureester |
| | | 3 Gew. % Maleinsäureanhydrid |
| | | Säurezahl = 17 mg KOH /g |
| | | |
| V | Ethylen-Acrylsäure-Copolymer | MI = 25 g/10 min |
| | | 15 Gew. % Acrylsäure |
| | | Säurezahl = 90 mq KOH /g |
| | | |
| VI | Ethylen-Acrylsäureester-Glycidylmethacrylat (GMA) | MI = 6 g/10 min |
| | | 24 Gew. % Methacrylat |
| | | 8 Gew. % Glycidylmethacrylat |
| | | Säurezahl = 25 mg KOH /g |
| | | |
| VII | Ethylen-Glycidylmethacrylat | MI = 5 g/10 min |
| | | 0 Gew. % Methacrylat |
| | | 8 Gew. % Glycidylmethacrylat |
| | | Säurezahl = 25 mg KOH /g |
| | | |
| VIII | Dimerfettsäure-Polyamid | Viskosität (160 °C) = 60000 mPa s |
| | | Erweichungspunkt = 90 °C |
| | | Aminzahl = 6 mq KOH /g |

### Viskosität: gemessen mit Brookfield -Viskosimeter oder als MFI

Aus den Bestandteilen werden Komponenten A oder B hergestellt durch Mischen in der Schmelze, nachträglichem Abkühlen und Granulieren zu ca. 5 bis 10 mm großen stäbchen-, kugel- oder kissenförmigen Teilen.

| | Mischung 1 | Mischung 2 | Mischung 3 | Mischung 4 | Mischung5 |
|---|---|---|---|---|---|
| Harz I | 35,0 | 30,0 | 35,0 | 39,0 | 41,0 |
| inertes Polymer II | 22,5 | 15,0 | 22,5 | 25,5 | 27,0 |
| inertes Polymer III | 22,5 | 15,0 | 22,5 | 25,5 | 27,0 |
| Polymer IV | | | 20,0 | 10,0 | 5,0 |
| Polymer V | 20,0 | 40,0 | | | |
| Summe Komponente | 100,0 | 100,0 | 100,0 | 100,0 | 100,0 |
| | | | | | |
| Erweichungspunkt [°C] | 86,0 | 90,5 | 96,1 | 92,1 | 88,3 |
| Viscosity 120 °C [mPa s] | 123750 | 444982 | 57250 | 45700 | 40500 |
| Viscosity 160 °C [mPa s] | 25250 | 84000 | 14643 | 11600 | 10200 |

| | Mischung 6 | Mischung 7 | Mischung 8 |
|---|---|---|---|
| Harz I | | 30,0 | 30,0 |
| inertes Polymer II | | 15,0 | 15,0 |
| inertes Polymer III | | 15,0 | 15,0 |
| Polymer VI | | 40,0 | |
| Polymer VII | | | 40,0 |
| Polymer VII | 100,0 | | |
| Summe: | 100,0 | 100,0 | 100,0 |
| | | | |
| Erweichungspunkt [°C] | 90,0 | 112,5 | 116,6 |
| Viscosity 160 °C [mPa s] | 67250 | 144375 | 250833 |

Die einzelnen Mischungen zeigen eine geeignete Viskosität und einen niedrigen Erweichungspunkt. Sie sind thermoplastisch.
Die Mischungen werden granuliert (ca 5 mm).
Aus den Mischungen werden erfindungsgemäße Schmelzklebstoffe hergestellt.

| | Versuch 1 | V 2 | V 3 | V 4 | V 5 | V 6 | V 7 |
|---|---|---|---|---|---|---|---|
| Mischung Nr. | | | | | | | |
| 7 | 50,0 | | 50,0 | 50,0 | | | |
| 8 | | 50,0 | | | | | |
| 1 | | 50,0 | 50,0 | | | | |
| 2 | | | | 50,0 | | | |
| 6 | 50,0 | | | | 50,0 | 50,0 | 50,0 |
| 3 | | | | | 50,0 | | |
| 4 | | | | | | 50,0 | |
| 5 | | | | | | | 50,0 |
| Summe: | 100,0 | 100,0 | 100,0 | 100,0 | 100,0 | 100,0 | 100,0 |
| | | | | | | | |
| Viscosity 160 °C[mPas] | 97750 | 101250 | 73667 | 126750 | 299500 | 150000 | 103000 |
| Viscosity 160 °C; 10 min [mPas] | | 129250 | 97667 | 227500 | | | |
| Viscosity 160 °C; 20 min [mPa s] | 153000 | 344000 | n. b. | n. b. | 403500 | 198000 | 130500 |
| Viscosity 160 °C; 30 min [mPa s] | 245500 | n. b. | | | 492000 | 222500 | 141500 |
| Viscosity 160 °C; 40 min [mPa s] | 480833 | | | | 717500 | 249000 | 153000 |

Die gemischten Proben zeigen eine Erhöhung der Viskosität bei Erwärmen.

V1 und V3 werden bei 130°C geschmolzen, gemischt und auf ein PE-Substrat aufgetragen. Die Schichtdicke beträgt ca. 300 µm. Auf dieses Substrat wird ein zweites gleichartiges gelegt und für 7 min bei 170°C erwärmt.
Es wird der Schälwiderstand nach DIN EN ISO 11339 gemessen.
V1 : 30 N / 25 mm
V3: 60 N/25 mm

Ein Schrumpfschlauch wird auf der Innenseite mit einem Klebstoff V4 versehen (5 g/cm). Dieser wird über ein Kabelende geschoben und danach 10 sec auf ca. 170°C mit heißer Luft erwärmt.
Die aufgeschrumpfte Verbindung ist mechanisch stabil verbunden.

## Patentansprüche

1. Reaktiver Schmelzklebstoff umfassend zwei getrennt vorliegende Komponenten A und B enthaltend jeweils ein oder mehrere Polymere A oder B mit unterschiedlichen funktionellen Gruppen, wobei diese Gruppen unter Temperatureinwirkung miteinander reagieren können, und
- die miteinander reaktiven funktionellen Gruppen ausgewählt sind aus Hydroxy-, Amin-, Carbonsäure-, Anhydrid-, Epoxidgruppen,
- nicht reaktive Polymere und/oder Additive in mindestens einer der Komponenten enthalten sind,
- die Komponenten in räumlich getrennten Bereichen vorliegen,
wobei der Klebstoff eine erste Temperatur in einem Bereich zwischen 80 bis 150 °C aufweist, in dem die Komponenten schmelzen und miteinander mischbar sind, ohne dass die funktionellen Gruppen miteinander reagieren, der Klebstoff einen zweiten Temperaturbereich zwischen 130 bis 190 °C aufweist in dem er schmelzen und chemisch vernetzen kann, wobei die zweite Temperatur oberhalb der ersten Temperatur liegt.

2. Schmelzklebstoff nach Anspruch 1, **dadurch gekennzeichnet, dass** Schmelz- und Vernetzungstemperatur mindestens 30 °C voneinander getrennt sind.

3. Schmelzklebstoff nach einem der Ansprüche 1 oder 2, **dadurch gekennzeichnet, dass** die Zusammensetzung bis zu 80 Gew-% nicht-reaktive Polymere und/oder Harze enthält.

4. Schmelzklebstoff nach einem der Ansprüche 1 bis 3, **dadurch gekennzeichnet, dass** die reaktiven Polymere A und/oder B eine Viskosität von 10000 bis 2000000 mPas oder eine MFI von 2 bis 2500 g/10min im ersten Temperaturintervall aufweisen.

5. Schmelzklebstoff nach einem der vorhergehenden Ansprüche, **dadurch gekennzeichnet, dass** der Schmelzklebstoff als inertes Polymer EVA enthält.

6. Schmelzklebstoff nach einem der vorhergehenden Ansprüche, **dadurch gekennzeichnet, dass** als Polymer A und B funktionalisierte Ethylen/(Meth)acrylat-Copolymere eingesetzt werden, die insbesondere mehrere funktionelle Gruppen pro Molekülkette enthalten.

7. Schmelzklebstoff nach einem der vorhergehenden Ansprüche, **dadurch gekennzeichnet, dass** der Klebstoff eine Viskosität von 10000 bis 500000 mPas im zweiten Temperaturintervall aufweist.

8. Schmelzklebstoff nach einem der vorhergehenden Ansprüche, **dadurch gekennzeichnet, dass** die Komponente A Polymer A und die Komponente B Polymer B enthalten.

9. Beschichtetes Substrat bestehend aus einem Trägermaterial, das auf einer Seite eine Schicht eines reaktiven Schmelzklebstoffs nach einem der Ansprüche 1 bis 8 aufweist.

10. Beschichtetes Substrat nach Anspruch 9, **dadurch gekennzeichnet, dass** die Schicht eine Dicke von 5 bis 500 µm aufweist, insbesondere von 10 bis 200 µm.

11. Beschichtetes Substrat nach Anspruch 9 oder 10, **dadurch gekennzeichnet, dass** das Substrat ein Kunststoffsubstrat ist, insbesondere ein Kunststoffschlauch ist, der auf der Innenseite eine Klebstoffschicht aufweist.

12. Beschichtetes Substrat nach Anspruch 11, **dadurch gekennzeichnet, dass** der Kunststoffschlauch ein Schrumpfschlauch ist mit einer Schrumpfungstemperatur im Bereich des zweiten Temperaturintervalls.

13. Beschichtetes Substrat nach Anspruch 11, **dadurch gekennzeichnet, dass** das Substrat eine flexible Folie ist.

14. Verfahren zum Verkleben von Substraten, wobei ein vorbeschichtetes Substrat nach Anspruch 9 bis 13 auf einen Gegenstand gebracht wird und unter Druck und Erwärmen auf eine Temperatur im zweiten Temperaturintervall der Klebstoff verfließt und vernetzt.

15. Verfahren nach Anspruch 14, **dadurch gekennzeichnet, dass** die Erwärmung durch IR, NIR, heiße Luft oder Heizplatten durchgeführt wird.

## Claims

1. A reactive hot-melt adhesive comprising two separately present components A and B, each containing one or more polymers A and B having different functional groups, wherein these groups are able to react with each other under the action of temperature, and
- the functional groups that are reactive with each other are selected from hydroxy, amine, carboxylic acid, anhydride and epoxy groups,
- non-reactive polymers and/or additives are contained in at least one of the components,
- the components are present in spatially separated areas,
wherein the adhesive has a first temperature in a range between 80 and 150 °C in which the components melt and can be mixed with each other without the functional groups reacting with each other, the adhesive having a second temperature range between 130 and 190 °C in which it can melt and become chemically cross-linked, and wherein the second temperature is above the first temperature.

2. The hot-melt adhesive according to claim 1, **characterized in that** the melt and cross-linking temperatures are at least 30 °C apart from each other.

3. The hot-melt adhesive according to claim 1 or 2, **characterized in that** the composition contains up to 80 wt.% non-reactive polymers and/or resins.

4. The hot-melt adhesive according to any one of claims 1 to 3, **characterized in that** the reactive polymers A and/or B have a viscosity of 10,000 to 2,000,000 mPas or an MFI of 2 to 2,500 g/10 min in the first temperature interval.

5. The hot-melt adhesive according to any one of the preceding claims, **characterized in that** the hot-melt-adhesive contains EVA as an inert polymer.

6. The hot-melt adhesive according to any one of the preceding claims, **characterized in that** functionalized ethylene/(meth)acrylate copolymers are used as the polymers A and B, which in particular contain multiple functional groups per molecule chain.

7. The hot-melt adhesive according to any one of the preceding claims, **characterized in that** the adhesive has a viscosity of 10,000 to 500,000 mPas in the second temperature interval.

8. The hot-melt adhesive according to any one of the preceding claims, **characterized in that** component A contains polymer A, and component B contains polymer B.

9. A coated substrate composed of a carrier material, which on one side comprises a layer of a reactive hot-melt adhesive according to any one of claims 1 to 8.

10. The coated substrate according to claim 9, **characterized in that** the layer has a thickness of 5 to 500 µm, in particular of 10 to 200 µm.

11. The coated substrate according to claim 9 or 10, **characterized in that** the substrate is a plastic substrate, in particular a plastic hose, which comprises an adhesive layer on the inside.

12. The coated substrate according to claim 11, **characterized in that** the plastic hose is a heatshrinkable hose, having a shrinkage temperature in the range of the second temperature interval.

13. The coated substrate according to claim 11, **characterized in that** the substrate is a flexible film.

14. A method for bonding substrates, wherein a precoated substrate according to claims 9 to 13 is applied to an article and, under pressure and heating to a temperature in the second temperature interval, the adhesive melts and becomes cross-linked.

15. The method according to claim 14, **characterized in that** the heating is carried out by way of IR, NIR, hot air or heating plates.

## Revendications

1. Adhésif fusible réactif comprenant deux composants A et B, présents séparément, qui contiennent chacun un ou plusieurs polymères A ou B comportant des groupes fonctionnels différents, ces groupes pouvant réagir entre eux sous l'action de la température, et
- les groupes fonctionnels co-réactifs étant choisis parmi les groupes hydroxy, amine, acide carboxylique, anhydride, époxy,
- des polymères et/ou additifs non réactifs étant contenus dans au moins l'un des composants,
- les composants étant présents dans des régions séparées dans l'espace,
l'adhésif ayant une première température dans une gamme comprise entre 80 et 150°C, dans laquelle les composants fondent et sont miscibles entre eux sans que les groupes fonctionnels réagissent entre eux, l'adhésif présentant une seconde gamme de températures comprise entre 130 et 190°C dans laquelle il peut fondre et réticuler chimiquement, la seconde température étant supérieure à la première température.

2. Adhésif fusible selon la revendication 1, **caractérisé en ce que** la fusion et la température de durcissement sont séparées d'au moins 30°C.

3. Adhésif fusible selon l'une des revendications 1 ou 2, **caractérisé en ce que** la composition contient jusqu'à 80% en poids de polymères et/ou de résines non réactifs.

4. Adhésif fusible selon l'une des revendications 1 à 3, **caractérisé en ce que** les polymères réactifs A et/ou B présentent une viscosité de 10 000 à 2 000 000 mPas ou un indice de fluidité de 2 à 2500 g/10 min dans le premier intervalle de température.

5. Adhésif fusible selon l'une des revendications précédentes, **caractérisé en ce que** l'adhésif fusible contient comme polymère inerte de l'éthylène-acétate de vinyle.

6. Adhésif fusible selon l'une des revendications précédentes, **caractérisé en ce que** les polymères A et B utilisés sont des copolymères éthylène/(méth)acrylate fonctionnalisés qui contiennent notamment plusieurs groupes fonctionnels par chaîne moléculaire.

7. Adhésif fusible selon l'une des revendications précédentes, **caractérisé en ce que** l'adhésif a une viscosité de 10 000 à 500 000 mPas dans le second intervalle de températures.

8. Adhésif fusible selon l'une des revendications précédentes, **caractérisé en ce que** le composant A contient le polymère A et le composant B contient le polymère B.

9. Substrat revêtu constitué d'une matière support qui comporte sur un côté une couche d'un adhésif fusible réactif selon l'une quelconque des revendications 1 à 8.

10. Substrat revêtu selon la revendication 9, **caractérisé en ce que** la couche a une épaisseur de 5 à 500 µm, en particulier de 10 à 200 µm.

11. Substrat revêtu selon la revendication 9 ou 10, **caractérisé en ce que** le substrat est un substrat de matière plastique, en particulier un tube de matière plastique comportant du côté intérieur une couche d'adhésif.

12. Substrat revêtu selon la revendication 11, **caractérisé en ce que** le tube de matière plastique est un tube rétractable dont la température de rétraction est située dans la zone du second intervalle de températures.

13. Substrat revêtu selon la revendication 11, **caractérisé en ce que** le substrat est un film flexible.

14. Procédé de collage de substrats, dans lequel un substrat pré-revêtu selon l'une des revendications 9 à 13 est placé sur un objet et l'adhésif s'écoule et réticule sous pression et par chauffage à une température dans le second intervalle de températures.

15. Procédé selon la revendication 14, **caractérisé en ce que** le chauffage est effectué par rayonnement infrarouge, rayonnement proche infrarouge, air chaud ou des plaques chauffantes.
